# EUROPÄISCHE PATENTANMELDUNG

(11) **EP 4 599 742 A1**
(43) Veröffentlichungstag der Anmeldung: **13.08.2025**
(21) Anmeldenummer: 25170985.3
(22) Anmeldetag: 09.11.2022
(51) Int. Cl.: A47J 36/32, A47J 45/06, F24C 7/08, H05B 6/06

(54) **AUFSTELLGERÄT FÜR EIN KOCHFELD MIT EINEM GRIFF UND VERFAHREN ZUM BETRIEB EINES AUFSTELLGERÄTS**

(30) Priorität: 30.11.2021 DE 102021131336
(62) Teilanmeldung aus: 22814387.1
(71) Anmelder: Miele & Cie. KG, 33332 Gütersloh (DE)
(72) Erfinder: Enslin, Andreas, 33334 Gütersloh (DE)

(57) **Zusammenfassung**

Die Erfindung betrifft ein Aufstellgerät (2) für ein Kochfeld, umfassend mindestens einen Griff (4) mit einem Greifabschnitt (6) mit mindestens einem in dem Griff (4) integrierten Greifbereich (8) zum Ergreifen des Aufstellgeräts (2) mit einer Hand (10) eines Benutzers, eine Steuerung, und eine mit der Steuerung signalübertragend verbundene Sendeeinheit zur Signalübertragung von dem Aufstellgerät (2) zu dem Kochfeld, wobei der Greifbereich (8) mindestens einen mit der Steuerung signalübertragend verbundenen Berührungssensor (11, 12) zur Detektion des Ergreifens des Griffs (4) aufweist, dadurch gekennzeichnet, dass der Berührungssensor (11, 12) zur im Wesentlichen gleichzeitigen Detektion einer Kraft und einer Position mindestens eines Fingers (14, 16, 18) der Hand (10) ausgebildet ist, wobei in Abhängigkeit eines Ausgangssignals des Berührungssensors (11, 12) eine mit der Steuerung signalübertragend verbundene Ausgabeeinheit des Aufstellgeräts und/oder die Sendeeinheit zur Ansteuerung des Kochfelds ansteuerbar sind/ist.

Ferner betrifft die Erfindung ein Verfahren zum Betrieb eines Aufstellgeräts (2).

## Beschreibung

Die Erfindung betrifft ein Aufstellgerät für ein Kochfeld mit einem Griff der im Oberbegriff des Patentanspruchs 1 genannten Art und ein Verfahren zum Betrieb eines Aufstellgeräts.

Derartige Aufstellgeräte für Kochfelder und Verfahren zu deren Betrieb sind in einer Vielzahl von Ausführungsformen bereits vorbekannt, beispielsweise aus der Druckschrift EP 3 893 603 A1.

Derartige Aufstellgeräte umfassen beispielsweise mindestens einen Griff mit einem Greifabschnitt mit mindestens einem in dem Griff integrierten Greifbereich zum Ergreifen des Aufstellgeräts mit einer Hand eines Benutzers, eine Steuerung, und eine mit der Steuerung signalübertragend verbundene Sendeeinheit zur Signalübertragung von dem Aufstellgerät zu dem Kochfeld, wobei der Greifbereich mindestens einen mit der Steuerung signalübertragend verbundenen Berührungssensor zur Detektion des Ergreifens des Griffs aufweist.

Gattungsgemäß sind beispielsweise die Druckschriften CN 105 747 836 A und DE 10 2019 126 830 A1.

Ferner ist aus der DE 10 2018 110 125 A1 ein Zubereitungsgerät für Nahrung und/oder Flüssigkeit auf einem Kochfeld oder in einem Garraum mit mindestens einer Waage zum Abwiegen von in das Zubereitungsgerät eingefüllter Nahrung und/oder Flüssigkeit und mit mindestens einem Griff zur Handhabung des Zubereitungsgeräts bekannt. Zur Verbesserung der Funktionalität des Zubereitungsgeräts ist die mindestens eine Waage in dem mindestens einen Griff des Zubereitungsgeräts angeordnet.

Weiterhin zeigt die Druckschrift WO 2020 153 826 A1 ein Garbehälter mit einem Griff, wobei in dem Griff ein Bedienelement integriert ist.

Der Erfindung stellt sich somit das Problem, ein Aufstellgerät für ein Kochfeld und ein Verfahren zum Betrieb eines auf einem Kochfeld aufstellbaren Aufstellgeräts zu verbessern.

Erfindungsgemäß wird dieses Problem durch ein Verfahren zum Betrieb eines auf einem Kochfeld aufstellbaren Aufstellgeräts mit den Merkmalen des Patentanspruchs 1 gelöst. Vorteilhafte Ausgestaltungen und Weiterbildungen der Erfindung ergeben sich aus den abhängigen Ansprüchen.

Der mit der Erfindung erreichbare Vorteil besteht insbesondere darin, dass ein Aufstellgerät für ein Kochfeld und ein Verfahren zum Betrieb eines Aufstellgeräts verbessert sind. Aufgrund der erfindungsgemäßen Ausbildung des Aufstellgeräts zum Aufstellen auf ein Kochfeld und des Verfahrens zum Betrieb eines derartigen Aufstellgeräts ist zum einen eine kostengünstige Benutzererkennung eines das Aufstellgerät benutzenden Benutzers ermöglicht. Zum anderen ist durch das Vorsehen des mindestens einen Berührungssensors in dem Greifabschnitt zur Detektion einer Berührung des Griffs durch den Benutzer zwecks manueller Bewegung des Aufstellgeräts eine Greifabsicht des Benutzers des Aufstellgeräts automatisch erkennbar. Ferner kann mittels der Erfindung ein Füllgrad des Aufstellgeräts, also ein Füllgewicht eines in das Aufstellgerät eingefüllten Garguts und/oder einer in das Aufstellgerät eingefüllten Flüssigkeit ohne viel Aufwand abgeschätzt werden. Darüber hinaus ist es mittels der Erfindung möglich, ein Verhalten des Benutzers bei der Benutzung des Aufstellgeräts zu ermitteln, so dass beispielsweise eine Interaktion des Benutzers mit dem Aufstellgerät ohne zusätzliche Mittel bestimmbar ist. Auch kann hierdurch die Sicherheit bei der Benutzung des Aufstellgeräts und/oder des Kochfelds wesentlich verbessert werden, ohne dass dadurch der Bedienkomfort für den Benutzer des Aufstellgeräts vermindert ist. Beispielsweise könnten Benutzerprofile für einzelne Benutzer in der Steuerung des Aufstellgeräts hinterlegt sein, so dass bestimmte Benutzer oder Benutzergruppen, wie in ihren Fähigkeiten eingeschränkte Benutzer und/oder Kinder, das Aufstellgerät und/oder das Kochfeld lediglich in vorher festgelegten Grenzen nutzen können. Hierbei kann auch die Technik der sogenannten Künstlichen Intelligenz zum Einsatz kommen.

Das Aufstellgerät ist nach Art, Funktionsweise, Dimensionierung und Material in weiten geeigneten Grenzen frei wählbar. Das Aufstellgerät kann beispielsweise als eine Pfanne oder ein Topf ausgebildet sein. Jedoch sind auch andere Ausführungsformen wie Wasserkocher, Bräter oder dergleichen denkbar. Entsprechend der Ausführungsform des Aufstellgeräts kann das Aufstellgerät über einen Griff oder mehrere Griffe verfügen, wobei die erfindungsgemäße Ausbildung des Griffs bei lediglich einem der Griffe oder einer Mehrzahl der Griffe vorliegen kann. Der mindestens eine Greifabschnitt mit dem Greifbereich ist dabei mittels des mindestens einen Berührungssensors als ein berührungsempfindlicher Bereich des Griffs ausgebildet. In anderen Ausführungsformen kann der mindestens eine Greifbereich zusätzlich auch als ein näherungssensitiver Bereich ausgebildet sein. Der mindestens eine Greifbereich kann dabei von außen sichtbar oder unsichtbar an dem Griff angeordnet sein. Beispielsweise kann der mindestens eine Greifbereich in den Griff vollständig integriert sein, so dass dieser Greifbereich von außen weder sichtbar noch fühlbar ist. Das Aufstellgerät kann für ein induktives Kochfeld geeignet ausgebildet sein. Dies ist jedoch nicht zwingend erforderlich. Das erfindungsgemäße Aufstellgerät kann für alle denkbaren Kochfeldtypen geeignet ausgebildet sein.

Grundsätzlich ist die weitere Verarbeitung der Detektion einer Berührung des Griffs durch den Benutzer, also das Verfahren zur Verarbeitung der Detektion einer Berührung des Griffs durch den Benutzer, in weiten geeigneten Grenzen frei wählbar. Entsprechendes gilt für die diesbezügliche Ausbildung des erfindungsgemäßen Aufstellgeräts.

Eine besonders vorteilhafte Weiterbildung des erfindungsgemäßen Aufstellgeräts sieht vor, dass der Berührungssensor derart an dem Griff angeordnet oder in den Griff integriert ist, dass der Berührungssensor bei dem Ergreifen des Griffs mit der Hand mittels des mindestens einen Fingers funktionssicher berührbar ist. Auf diese Weise ist sichergestellt, dass das Ergreifen des Griffs, also das Greifen durch den Benutzer, funktionssicher detektiert wird.

Eine weitere vorteilhafte Weiterbildung des erfindungsgemäßen Aufstellgeräts sieht vor, dass der mindestens eine Berührungssensor mindestens als ein erster Berührungssensor und ein zweiter Berührungssensor ausgebildet ist, wobei bei auf dem Kochfeld aufgestellten Aufstellgerät der erste Berührungssensor auf der dem Kochfeld zugewandten Seite des Griffs und der zweite Berührungssensor auf der dem Kochfeld abgewandten Seite des Griffs angeordnet ist. Hierdurch ist die Handhabung des Aufstellgeräts weiter vereinfacht, ohne, dass dadurch die Funktionssicherheit bei der Detektion des Ergreifens mittels des mindestens einen Berührungssensors beeinträchtigt ist. Entsprechend ist die Ergonomie bei der Benutzung des erfindungsgemäßen Aufstellgeräts weiter verbessert.

Eine andere vorteilhafte Weiterbildung des erfindungsgemäßen Aufstellgeräts sieht vor, dass der Berührungssensor als eine berührungssensitive Folie ausgebildet ist. Folien sind besonders einfach an einem Griff für ein Aufstellgerät applizierbar. Beispielsweise lassen sich berührungssensitive Folien sehr leicht formschlüssig und dicht an dem Griff anordnen, so dass die Funktionalität des Berührungssensors durch beim Kochen oder Garen auftretende Umgebungsbedingungen nicht beeinträchtigt wird.

Ein Aspekt ist es den Berührungssensor oder einen berührungssensitiven Bereich als eine Glasabdeckung auszuführen. Vorzugsweise ist der Berührungssensor unterhalb der Glasabdeckung angeordnet und die Glasabdeckung bildet einen Abschnitt der Äußeren Oberfläche des Aufstellgeräts.

Eine weitere vorteilhafte Weiterbildung des erfindungsgemäßen Aufstellgeräts sieht vor, dass das Aufstellgerät mindestens eine mit der Steuerung signalübertragend verbundene Eingabeeinheit mit mindestens einem in dem Griff integrierten Eingabebereich zur Eingabe eines Benutzerbefehls durch den Benutzer des Aufstellgeräts aufweist, wobei der Eingabebereich in einem von dem Greifabschnitt positionsverschiedenen Eingabeabschnitt angeordnet ist und mittels des Benutzerbefehls das Aufstellgerät und/oder das Kochfeld ansteuerbar sind/ist. Auf diese Weise ist beispielsweise die Sicherheit bei der Bedienung des Aufstellgeräts und insbesondere die Sicherheit bei der Bedienung des Kochfelds wesentlich verbessert, ohne dass dadurch der Bedienkomfort für den Benutzer des Aufstellgeräts vermindert ist. Zum einen ist durch die klare räumliche Trennung des Griffs in einen Greifabschnitt und in den mindestens einen Eingabeabschnitt eine ungewollte Bedienung des mindestens einen Eingabebereichs der mindestens einen Eingabeeinheit bei einem Greifen des Griffs zur manuellen Bewegung des Aufstellgeräts wirksam entgegengewirkt. Bei dem erfindungsgemäßen Aufstellgerät ist somit eine Unterscheidung zwischen einer Bedienung des Griffs zum Zwecke der Eingabe eines Benutzerbefehls auf der einen Seite und einer Bedienung des Griffs zum Zwecke der manuellen Bewegung des Aufstellgeräts auf der anderen Seite ermöglicht.

Eine vorteilhafte Weiterbildung der vorgenannten Ausführungsform des erfindungsgemäßen Aufstellgeräts sieht vor, dass in Abhängigkeit der Detektion des Ergreifens durch den Berührungssensor die Eingabe des Benutzerbefehls mittels der Steuerung sperrbar ist. Auf diese Weise ist der Schutz gegen eine Fehlbedienung des Aufstellgeräts weiter verbessert. Der Berührungssensor kann beispielsweise als ein kapazitiver Sensor ausgebildet sein.

Eine andere vorteilhafte Weiterbildung des erfindungsgemäßen Aufstellgeräts sieht vor, dass in Abhängigkeit der mittels des Berührungssensors detektierten Berührung des Griffs die Steuerung des Aufstellgeräts und/oder eine Kochfeldsteuerung des Kochfelds von einem Standby-Modus in einen Bereitschaftsmodus oder einen Betriebsmodus überführbar ist, wobei die Steuerung und/oder Kochfeldsteuerung in dem Standby-Modus im Wesentlichen lediglich zur Überführung in den Bereitschaftsmodus oder den Betriebsmodus, in dem Bereitschaftsmodus zur Durchführung einer Zuordnung des Aufstellgeräts zu einer Kochstelle des Kochfelds und in dem Betriebsmodus für den Betrieb des Aufstellgeräts und/oder des Kochfelds in vollem Funktionsumfang ausgebildet sind/ist. Hierdurch ist zum einen ein energiesparender Betrieb des Aufstellgeräts und/oder des Kochfelds ermöglicht. Zum anderen ist damit der Bedienkomfort bei gleichzeitig gewährleisteter Sicherheit bei der Bedienung des Aufstellgeräts und des Kochfelds weiter gesteigert.

Eine weitere vorteilhafte Weiterbildung des erfindungsgemäßen Aufstellgeräts sieht vor, dass der Berührungssensor gleichzeitig als ein weiterer Eingabebereich zur Eingabe eines weiteren Benutzerbefehls zur Ansteuerung des Aufstellgeräts und/oder des Kochfelds ausgebildet ist, bevorzugt, dass das Aufstellgerät und/oder das Kochfeld in Abhängigkeit der Detektion der Berührung des Griffs mittels der Steuerung einschaltbar sind/ist. Auf diese Weise ist es möglich, den mindestens einen Berührungssensor gleichzeitig für eine intuitive Eingabe eines weiteren Benutzerbefehls durch den Benutzer zu verwenden. Somit ist die Funktionalität des mindestens einen Berührungssensors erhöht. Diese Eingabe eines weiteren Benutzerbefehls kann dabei zusätzlich zu oder alternativ zu der Eingabe eines Benutzerbefehls mittels des vorgenannten mindestens einen Eingabebereichs erfolgen.

Wie oben bereits ausgeführt, ist das erfindungsgemäße Verfahren in weiten geeigneten Grenzen frei wählbar.

Entsprechend der obigen Ausführungen zu dem erfindungsgemäßen Aufstellgerät sieht eine vorteilhafte Weiterbildung des erfindungsgemäßen Verfahrens vor, dass mittels des mindestens einen Berührungssensors ein Füllgewicht eines/einer in das Aufstellgerät eingefüllten Garguts und/oder Flüssigkeit erkannt wird, und/oder ein das Aufstellgerät handhabendes Individuum und/oder ein das Aufstellgerät handhabendes Mitglied einer Personengruppe erkannt wird, und/oder der mindestens eine Berührungssensor gleichzeitig als ein weiterer Eingabebereich zur Eingabe eines weiteren Benutzerbefehls zur Ansteuerung des Aufstellgeräts und/oder des Kochfelds verwendet wird, bevorzugt, dass eine Handhabungs-Interaktion des Benutzers mit dem Aufstellgerät erkannt wird und/oder eine Kochfeldaktion gestartet und/oder eingestellt und/oder beendet wird.

Zwei Ausführungsbeispiele der Erfindung sind in den Zeichnungen rein schematisch dargestellt und werden nachfolgend näher beschrieben. Es zeigt
- Figur 1: ein erstes Ausführungsbeispiel des erfindungsgemäßen Aufstellgeräts für ein Kochfeld zur Durchführung des erfindungsgemäßen Verfahrens in einer perspektivischen Darstellung,
- Figur 2: das erste Ausführungsbeispiel in einer teilweisen Seitenansicht und
- Figur 3: ein zweites Ausführungsbeispiel des erfindungsgemäßen Aufstellgeräts für ein Kochfeld zur Durchführung des erfindungsgemäßen Verfahrens in einer perspektivischen Darstellung.

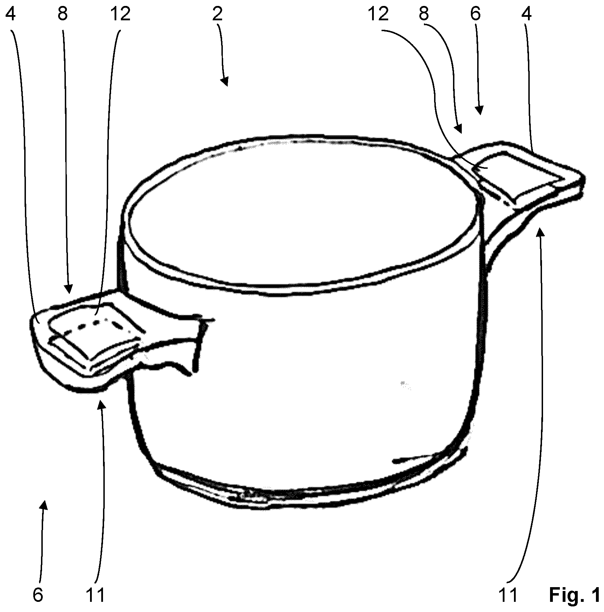

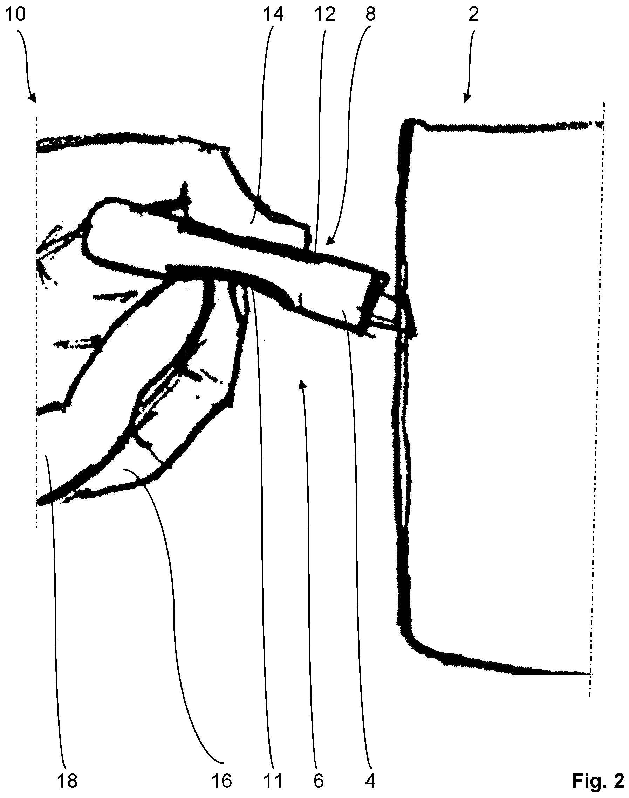

In den Fig. 1 und 2 ist ein erstes Ausführungsbeispiel des erfindungsgemäßen Aufstellgeräts für ein Kochfeld zur Durchführung des erfindungsgemäßen Verfahrens rein exemplarisch dargestellt.

Das Aufstellgerät 2 ist hier als ein Kochtopf zum Aufstellen auf ein nicht dargestelltes Kochfeld ausgebildet und umfasst zwei Griffe 4 mit jeweils einem Greifabschnitt 6 mit jeweils einem in dem Griff 4 integrierten Greifbereich 8 zum Ergreifen des Aufstellgeräts 2 mit einer Hand 10 eines nicht näher dargestellten Benutzers, eine nicht dargestellte Steuerung und eine mit der Steuerung signalübertragend verbundene, ebenfalls nicht dargestellte Sendeeinheit zur Signalübertragung von dem Aufstellgerät 2 zu dem Kochfeld, wobei der Greifbereich 8 zwei mit der Steuerung signalübertragend verbundene Berührungssensoren, nämlich einen bei auf dem Kochfeld aufgestellten Aufstellgerät 2 dem Kochfeld zugewandten ersten Berührungssensor 11 und einen bei auf dem Kochfeld aufgestellten Aufstellgerät 2 dem Kochfeld abgewandten zweiten Berührungssensor 12, zur Detektion des Ergreifens des Griffs 4 aufweist.

Erfindungsgemäß sind der erste und der zweite Berührungssensor 11, 12 jeweils zur im Wesentlichen gleichzeitigen Detektion einer Kraft und einer Position mindestens eines Fingers, beispielsweise des Daumens 14, des Zeigefingers 16 und des Mittelfingers 18 der linken Hand 10 ausgebildet, wobei in Abhängigkeit von Ausgangssignalen der Berührungssensoren 11, 12 die mit der Steuerung signalübertragend verbundene, nicht dargestellte Sendeeinheit zur Ansteuerung des Kochfelds ansteuerbar ist. Siehe hierzu die Fig. 2, in der der in der Bildebene der Fig. 1 links dargestellte Griff 4 und die linke Hand 10 des Benutzers jeweils teilweise dargestellt sind. Alternativ oder zusätzlich hierzu ist es bei anderen Ausführungsformen der Erfindung denkbar, dass eine Ausgabeeinheit des Aufstellgeräts zur Ausgabe von akustischen und/oder visuellen Informationen an den Benutzer des Aufstellgeräts, analog zu der vorgenannten Sendeeinheit des vorliegenden Ausführungsbeispiels, mittels der Ausgangssignale des mindestens einen Berührungssensors ansteuerbar ist.

Wie aus den Fig. 1 und 2 hervorgeht, sind die Berührungssensoren 11, 12 derart in dem jeweiligen Griff 4 integriert, dass der jeweilige Berührungssensor 11, 12 bei dem Ergreifen des korrespondierenden Griffs 4 mit der Hand 10 mittels des mindestens einen Fingers 14, 16, 18 funktionssicher berührbar ist. Die beiden Griffe 4 sind bei dem vorliegenden Ausführungsbeispiel zueinander identisch ausgebildet, so dass Ausführungen zu dem in der Bildebene der Fig. 1 links dargestellten Griff 4 gleichfalls für den in der Bildebene der Fig. 1 rechts dargestellten Griff 4 gelten. Zur leichteren Integration der Berührungssensoren 11, 12 sind diese jeweils als eine berührungssensitive Folie ausgebildet.

Das Aufstellgerät 2 gemäß dem vorliegenden Ausführungsbeispiel ist ferner derart ausgebildet und eingerichtet, dass die Steuerung und eine nicht dargestellte Kochfeldsteuerung des ebenfalls nicht dargestellten Kochfelds in Abhängigkeit der mittels der Berührungssensoren 11, 12 detektierten Berührung des jeweiligen Griffs 4 von einem Standby-Modus in einen Bereitschaftsmodus oder einen Betriebsmodus überführbar sind, wobei die Steuerung und/oder die Kochfeldsteuerung in dem Standby-Modus im Wesentlichen lediglich zur Überführung in den Bereitschaftsmodus oder den Betriebsmodus, in dem Bereitschaftsmodus zur Durchführung einer Zuordnung des Aufstellgeräts 2 zu einer nicht dargestellten Kochstelle des Kochfelds und in dem Betriebsmodus für den Betrieb des Aufstellgeräts 2 und des Kochfelds in vollem Funktionsumfang ausgebildet sind.

Entsprechend ist der jeweilige Berührungssensor 11, 12 jedes der Griffe 4 hier gleichzeitig als ein weiterer Eingabebereich zur Eingabe eines weiteren Benutzerbefehls zur Ansteuerung des Kochfelds ausgebildet, nämlich derart, dass das Aufstellgerät und das Kochfeld in Abhängigkeit der Detektion der Berührung des jeweiligen Griffs 4 mittels der Steuerung einschaltbar sind. Die Verwendung der Formulierungen "weiterer Eingabebereich" und weiteren Benutzerbefehls" dient einzig der Abgrenzung zu einem möglicherweise alternativ oder zusätzlich vorgesehenen Eingabebereich zur Eingabe von Benutzerbefehlen, was nachfolgend noch näher ausgeführt wird.

Nachfolgend sind die Funktionsweise des erfindungsgemäßen Aufstellgeräts und das erfindungsgemäße Verfahren gemäß dem vorliegenden ersten Ausführungsbeispiel anhand der Fig. 1 und 2 näher erläutert.

Um einen möglichst energiesparenden Betrieb des Aufstellgeräts 2 und des Kochfelds zu ermöglichen, ist es gemäß der obigen Ausführungen vorgesehen, dass in Abhängigkeit der mittels der Bewegungssensoren 11, 12 detektierten Berührung des jeweiligen Griffs 4 die Steuerung des Aufstellgeräts 2 und die Kochfeldsteuerung des Kochfelds von dem jeweiligen Standby-Modus in einen Bereitschaftsmodus oder einen Betriebsmodus überführt werden, wobei die Steuerung und Kochfeldsteuerung in dem Standby-Modus im Wesentlichen lediglich in den Bereitschaftsmodus oder den Betriebsmodus überführt werden, in dem Bereitschaftsmodus eine Zuordnung des Aufstellgeräts 2 zu einer der Kochstellen des Kochfelds durchführen und in dem Betriebsmodus das Aufstellgerät 2 und das Kochfeld in vollem Funktionsumfang betreiben. Entsprechend wird die Steuerung des Aufstellgeräts '2 und die Kochfeldsteuerung des Kochfelds von dem jeweiligen Standby-Modus in den jeweiligen Bereitschaftsmodus oder den jeweiligen Betriebsmodus überführt, sofern eine Berührung einer der Griffe 4 mittels der korrespondierenden Berührungssensoren 11, 12 detektiert worden ist. Beispielsweise wird das Aufstellgerät 2 und das Kochfeld in Abhängigkeit der Detektion der Berührung einer der beiden Griffe 4 mittels der Steuerung eingeschaltet.

Zusätzlich zu der Detektion einer Berührung eines der Griffe 4 durch den Benutzer werden die Berührungssensoren 11, 12 hier auch für mindestens eine weitere Funktion, nämlich zur Eingabe eines weiteren Benutzerbefehls verwendet. Beispielsweise ist es denkbar, dass mindestens einer des mindestens einen Berührungssensors 11, 12 zur Detektion einer Drehbewegung der menschlichen Hand 10 relativ zu dem jeweiligen Griff 4 ausgebildet ist, wobei in Abhängigkeit der Detektion der Drehbewegung der weitere Benutzerbefehl durch den Benutzer eingegeben wird. Bei dem vorliegenden Ausführungsbeispiel könnte beispielsweise der Benutzer zwecks Einstellung einer Leistungsstufe bei der vorgenannten Kochstelle des Kochfelds, auf der das Aufstellgerät 2 aufgestellt worden ist, mittels einer Drehung von dessen Hand 10 um eine Achse des Griffs 4, also durch eine Bewegung der Finger 14, 16, 18 relativ zu dem jeweils korrespondierenden Berührungssensor 11, 12, die Leistungsstufe für diese Kochstelle je nach Drehrichtung erhöhen oder erniedrigen können.

Zusätzlich kann es vorgesehen sein, dass mittels der Steuerung eine Leistung des Kochfelds automatisch reduziert wird, um so beispielsweise sensible Bauteile des Kochfelds, die aufgrund einer bei einer manuellen Bewegung des Aufstellgeräts 2 durch einen Benutzer auftretenden mechanischen Belastung in deren Funktion beeinträchtigt oder beschädigt werden könnten, wirksam zu schützen.

Wie oben bereits ausgeführt, wird mittels der Berührungssensoren 11, 12 beispielsweise ein Füllgewicht eines/einer in das Aufstellgerät 2 eingefüllten Garguts und/oder Flüssigkeit erkannt. Das Gargut und die Flüssigkeit sind in den Fig. 1 und 2 nicht dargestellt. Ferner wird mittels der Berührungssensoren 11, 12 ein das Aufstellgerät 2 handhabendes Individuum, also der konkrete Benutzer des Aufstellgeräts 2, erkannt. Denkbar ist aber auch, dass mittels der Berührungssensoren 11, 12 ein das Aufstellgerät 2 handhabendes Mitglied einer Personengruppe, beispielsweise ein Kind oder ein in dessen Fähigkeiten eingeschränkter Erwachsener, erkannt wird. Mittels der speziellen Ausbildung der Berührungssensoren 11, 12 ist der jeweilige Greifbereich 8 somit gleichzeitig als ein weiterer Eingabebereich zur Eingabe eines weiteren Benutzerbefehls zur Ansteuerung des Aufstellgeräts 2 und/oder des Kochfelds verwendbar, nämlich derart, dass beispielsweise eine Handhabungs-Interaktion des Benutzers mit dem Aufstellgerät 2 erkannt wird und/oder eine Kochfeldaktion gestartet und/oder eingestellt und/oder beendet wird.

Entsprechend der vorgenannten Ausführungen zu dem vorliegenden ersten Ausführungsbeispiel ist das Aufstellgerät 2 gemäß dem ersten Ausführungsbeispiel sehr vielfältig verwendbar. Auf Basis der mittels der Berührungssensoren 11, 12 gemessenen Kräfte ist es somit möglich, automatisch zu erkennen, wie weit das Aufstellgerät 2 mit einem Gargut und/oder einer Flüssigkeit gefüllt ist. Entsprechend lässt sich diese Information für die Durchführung einer Kochassistenz mittels eines Kochassistenzsystems nutzen und die Kochassistenz an die individuellen Anforderungen anpassen. Ferner können kritische Situationen beim Kochen oder Braten rechtzeitig erkannt oder vermieden werden. Darüber hinaus lassen sich Nutzeraktionen, also Interaktionen des Benutzers mit dem Aufstellgerät 2, zur Energieeinsparung und/oder zur Erhöhung der Sicherheit bei der Benutzung des Aufstellgeräts 2 und/oder des Kochfelds, auf dem das Aufstellgerät 2 aufgestellt wird, umsetzen.

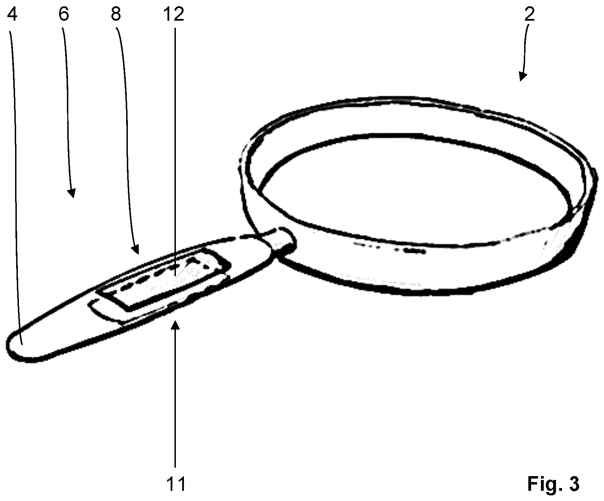

In der Fig. 3 ist ein zweites Ausführungsbeispiel des erfindungsgemäßen Aufstellgeräts dargestellt.

Das Aufstellgerät 2 des zweiten Ausführungsbeispiels ist als eine Pfanne ausgebildet und verfügt im Unterschied zu dem ersten Ausführungsbeispiel lediglich über einen einzigen Griff 4, nämlich einen Stangengriff. Ansonsten entspricht das zweite Ausführungsbeispiel dem ersten Ausführungsbeispiel gemäß der Fig. 1 und 2, so dass im Übrigen auf die obigen Ausführungen zu dem ersten Ausführungsbeispiel verwiesen wird.

Aufgrund der erfindungsgemäßen Ausbildung des Aufstellgeräts 2 zum Aufstellen auf das Kochfeld und des Verfahrens zum Betrieb des Aufstellgeräts 2 ist somit zum einen eine kostengünstige Benutzererkennung des das Aufstellgerät 2 benutzenden Benutzers ermöglicht. Zum anderen ist durch das Vorsehen des mindestens einen Berührungssensors 11, 12 in dem Greifabschnitt 6 zur Detektion einer Berührung des Griffs 4 durch den Benutzer zwecks manueller Bewegung des Aufstellgeräts 2 eine Greifabsicht des Benutzers des Aufstellgeräts 2 automatisch erkennbar. Ferner kann mittels des Aufstellgeräts 2 und des diesbezüglichen Verfahrens zu dessen Betrieb ein Füllgrad des Aufstellgeräts 2, also ein Füllgewicht eines in das Aufstellgerät 2 eingefüllten Garguts und/oder einer in das Aufstellgerät 2 eingefüllten Flüssigkeit ohne viel Aufwand abgeschätzt werden. Darüber hinaus ist es mittels des Aufstellgeräts 2 und des korrespondierenden Verfahrens möglich, ein Verhalten des Benutzers bei der Benutzung des Aufstellgeräts 2 zu ermitteln, so dass beispielsweise eine Interaktion des Benutzers mit dem Aufstellgerät 2 ohne zusätzliche Mittel bestimmbar ist. Auch kann hierdurch die Sicherheit bei der Benutzung des Aufstellgeräts 2 und des Kochfelds wesentlich verbessert werden, ohne dass dadurch der Bedienkomfort für den Benutzer des Aufstellgeräts 2 vermindert ist. Beispielsweise könnten Benutzerprofile für einzelne Benutzer in der Steuerung des Aufstellgeräts 2 hinterlegt sein, so dass bestimmte Benutzer oder Benutzergruppen, wie in ihren Fähigkeiten eingeschränkte Benutzer und/oder Kinder, das Aufstellgerät 2 und das Kochfeld lediglich in vorher festgelegten Grenzen nutzen können. Hierbei kann beispielsweise die Technik der sogenannten Künstlichen Intelligenz zum Einsatz kommen.

Das erfindungsgemäße Aufstellgerät und das erfindungsgemäße Verfahren sind jedoch nicht auf die oben erläuterten Ausführungsbeispiele beschränkt.

Das Aufstellgerät kann auch als Wasserkocher, Bräter oder dergleichen ausgebildet sein. Entsprechend der Ausführungsform des Aufstellgeräts kann das Aufstellgerät über einen Griff oder mehrere Griffe verfügen, wobei die erfindungsgemäße Ausbildung des Griffs bei lediglich einem der Griffe oder einer Mehrzahl der Griffe vorliegen kann. Das Aufstellgerät kann für ein induktives Kochfeld geeignet ausgebildet sein. Dies ist jedoch nicht zwingend erforderlich. Das erfindungsgemäße Aufstellgerät kann für alle denkbaren Kochfeldtypen geeignet ausgebildet sein.

Der mindestens eine Berührungssensor ist nach Art, Funktionsweise, Dimensionierung, Material, Anzahl und Anordnung in weiten geeigneten Grenzen frei wählbar. Die vorgenannten Erläuterungen sind somit lediglich exemplarisch zu verstehen und nicht begrenzend. Je nach Anwendungsfall wird der Fachmann den mindestens einen Berührungssensor geeignet auswählen und beispielsweise voneinander verschiedene Sensortechnologien miteinander kombinieren.

Zusätzlich zu der Sendeeinheit kann das erfindungsgemäße Aufstellgerät auch eine Empfangseinheit zwecks Signalübertragung von dem Kochfeld zu dem Aufstellgerät aufweisen. Denkbar ist auch, dass die Sendeeinheit des erfindungsgemäßen Aufstellgeräts als eine kombinierte Sende-/Empfangseinheit ausgebildet ist.

Im Unterschied zu den beiden erläuterten Ausführungsbeispielen kann es in anderen Ausführungsformen der Erfindung vorgesehen sein, dass das Aufstellgerät alternativ oder zusätzlich zu dem vorgenannten weiteren Eingabebereich mindestens eine mit der Steuerung signalübertragend verbundene Eingabeeinheit mit mindestens einem in dem Griff integrierten Eingabebereich zur Eingabe eines Benutzerbefehls durch den Benutzer des Aufstellgeräts aufweist, wobei der Eingabebereich in einem von dem Greifabschnitt positionsverschiedenen Eingabeabschnitt angeordnet ist und mittels des Benutzerbefehls das Aufstellgerät und/oder das Kochfeld ansteuerbar sind/ist. Auf diese Weise ist beispielsweise die Sicherheit bei der Bedienung des Aufstellgeräts und insbesondere die Sicherheit bei der Bedienung des Kochfelds wesentlich verbessert, ohne dass dadurch der Bedienkomfort für den Benutzer des Aufstellgeräts vermindert ist. Zum einen ist durch die klare räumliche Trennung des Griffs in einen Greifabschnitt und in den mindestens einen Eingabeabschnitt eine ungewollte Bedienung des mindestens einen Eingabebereichs der mindestens einen Eingabeeinheit bei einem Greifen des Griffs zur manuellen Bewegung des Aufstellgeräts wirksam entgegengewirkt. Bei dem erfindungsgemäßen Aufstellgerät ist somit eine Unterscheidung zwischen einer Bedienung des Griffs zum Zwecke der Eingabe eines Benutzerbefehls auf der einen Seite und einer Bedienung des Griffs zum Zwecke der manuellen Bewegung des Aufstellgeräts auf der anderen Seite ermöglicht. Der mindestens eine Eingabebereich kann dabei von außen sichtbar oder unsichtbar an dem Griff angeordnet sein. Beispielsweise kann der mindestens eine Eingabebereich in den Griff vollständig integriert sein, so dass dieser Eingabebereich von außen weder sichtbar noch fühlbar ist.

Eine vorteilhafte Weiterbildung der vorgenannten Ausführungsform des erfindungsgemäßen Aufstellgeräts sieht vor, dass in Abhängigkeit der Detektion des Ergreifens durch den Berührungssensor die Eingabe des Benutzerbefehls mittels der Steuerung sperrbar ist. Auf diese Weise ist der Schutz gegen eine Fehlbedienung des Aufstellgeräts weiter verbessert. Der Berührungssensor kann beispielsweise als ein kapazitiver Sensor ausgebildet sein.

## Patentansprüche

1. Verfahren zum Betrieb eines Aufstellgeräts (2) für ein Kochfeld, umfassend
mindestens einen Griff (4) mit einem Greifabschnitt (6) mit mindestens einem in dem Griff (4) integrierten Greifbereich (8) zum Ergreifen des Aufstellgeräts (2) mit einer Hand (10) eines Benutzers,
eine Steuerung, und
eine mit der Steuerung signalübertragend verbundene Sendeeinheit zur Signalübertragung von dem Aufstellgerät (2) zu dem Kochfeld,
wobei der Greifbereich (8) mindestens einen mit der Steuerung signalübertragend verbundenen Berührungssensor (11, 12) zur Detektion des Ergreifens des Griffs (4) aufweist,
wobei der Berührungssensor (11, 12) zur im Wesentlichen gleichzeitigen Detektion einer Kraft und einer Position mindestens eines Fingers (14, 16, 18) der Hand (10) ausgebildet ist,
wobei in Abhängigkeit eines Ausgangssignals des Berührungssensors (11, 12) eine mit der Steuerung signalübertragend verbundene Ausgabeeinheit des Aufstellgeräts und/oder die Sendeeinheit zur Ansteuerung des Kochfelds ansteuerbar sind/ist,
wobei mittels des mindestens einen Berührungssensors (11, 12) im Wesentlichen gleichzeitig eine Kraft und eine Position mindestens des einen Fingers (14, 16, 18) der Hand (10) detektiert wird, und
wobei in Abhängigkeit des Ausgangssignals des mindestens einen Berührungssensors (11, 12) die Ausgabeeinheit des Aufstellgeräts und/oder die Sendeeinheit zur Ansteuerung des Kochfelds angesteuert werden/wird
**dadurch gekennzeichnet, dass**
der mindestens eine Berührungssensor (11, 12) gleichzeitig als ein weiterer Eingabebereich zur Eingabe eines weiteren Benutzerbefehls zur Ansteuerung des Aufstellgeräts und/oder des Kochfelds verwendet wird, bevorzugt, dass eine Handhabungs-Interaktion des Benutzers mit dem Aufstellgerät (2) erkannt wird und/oder eine Kochfeldaktion gestartet und/oder eingestellt und/oder beendet wird.

2. Verfahren zum Betrieb eines Aufstellgeräts (2) nach dem vorangehenden Anspruch, wobei der Berührungssensor (11, 12) derart an dem Griff angeordnet oder in den Griff (4) integriert ist, dass der Berührungssensor (11, 12) bei dem Ergreifen des Griffs (4) mit der Hand (10) mittels des mindestens einen Fingers (14, 16, 18) funktionssicher berührbar ist.

3. Verfahren zum Betrieb eines Aufstellgeräts (2) nach einem der vorangehenden Ansprüche, wobei mittels des mindestens einen Berührungssensors (11, 12) ein Füllgewicht eines/einer in das Aufstellgerät (2) eingefüllten Garguts und/oder Flüssigkeit erkannt wird.

4. Verfahren zum Betrieb eines Aufstellgeräts (2) nach einem der vorangehenden Ansprüche, wobei mittels des mindestens einen Berührungssensors (11, 12) ein das Aufstellgerät (2) handhabendes Individuum und/oder ein das Aufstellgerät handhabendes Mitglied einer Personengruppe erkannt wird.

5. Verfahren zum Betrieb eines Aufstellgeräts (2) nach einem der vorangehenden Ansprüche, wobei der mindestens eine Berührungssensor (11, 12) mindestens als ein erster Berührungssensor (11) und ein zweiter Berührungssensor (12) ausgebildet ist, wobei bei auf dem Kochfeld aufgestellten Aufstellgerät (2) der erste Berührungssensor (11) auf der dem Kochfeld zugewandten Seite des Griffs (4) und der zweite Berührungssensor (12) auf der dem Kochfeld abgewandten Seite des Griffs (4) angeordnet ist.

6. Verfahren zum Betrieb eines Aufstellgeräts (2) nach einem der vorangehenden Ansprüche, wobei der Berührungssensor (11, 12) als eine berührungssensitive Folie ausgebildet ist.

7. Verfahren zum Betrieb eines Aufstellgeräts (2) nach einem der vorangehenden Ansprüche, wobei das Aufstellgerät mindestens eine mit der Steuerung signalübertragend verbundene Eingabeeinheit mit mindestens einem in dem Griff integrierten Eingabebereich zur Eingabe eines Benutzerbefehls durch den Benutzer des Aufstellgeräts aufweist, wobei der Eingabebereich in einem von dem Greifabschnitt positionsverschiedenen Eingabeabschnitt angeordnet ist und mittels des Benutzerbefehls das Aufstellgerät und/oder das Kochfeld ansteuerbar sind/ist.

8. Verfahren zum Betrieb eines Aufstellgeräts (2) nach dem vorangehenden Anspruch, wobei in Abhängigkeit der Detektion des Ergreifens durch den Berührungssensor die Eingabe des Benutzerbefehls mittels der Steuerung sperrbar ist.

9. Verfahren zum Betrieb eines Aufstellgeräts (2) nach einem der vorangehenden Ansprüche, wobei in Abhängigkeit der mittels des Berührungssensors (11, 12) detektierten Berührung des Griffs (4) die Steuerung des Aufstellgeräts (2) und/oder eine Kochfeldsteuerung des Kochfelds von einem Standby-Modus in einen Bereitschaftsmodus oder einen Betriebsmodus überführbar ist, wobei die Steuerung und/oder Kochfeldsteuerung in dem Standby-Modus im Wesentlichen lediglich zur Überführung in den Bereitschaftsmodus oder den Betriebsmodus, in dem Bereitschaftsmodus zur Durchführung einer Zuordnung des Aufstellgeräts (2) zu einer Kochstelle des Kochfelds und in dem Betriebsmodus für den Betrieb des Aufstellgeräts (2) und/oder des Kochfelds in vollem Funktionsumfang ausgebildet sind/ist.

10. Verfahren zum Betrieb eines Aufstellgeräts (2) nach einem der vorangehenden Ansprüche, wobei dass der Berührungssensor (11, 12) gleichzeitig als ein weiterer Eingabebereich zur Eingabe eines weiteren Benutzerbefehls zur Ansteuerung des Aufstellgeräts und/oder des Kochfelds ausgebildet ist, bevorzugt, dass das Aufstellgerät und/oder das Kochfeld in Abhängigkeit der Detektion der Berührung des Griffs (4) mittels der Steuerung einschaltbar sind/ist.
